(19) **Europäisches Patentamt / European Patent Office / Office européen des brevets**

(11) **EP 4 708 052 A1**

(12) **EUROPEAN PATENT APPLICATION**
published in accordance with Art. 153(4) EPC

(43) Date of publication:
**11.03.2026 Bulletin 2026/11**

(21) Application number: **24857456.8**

(22) Date of filing: **26.04.2024**

(51) International Patent Classification (IPC):
**G06F 11/10** (2006.01)

(52) Cooperative Patent Classification (CPC):
**G06F 11/10**

(86) International application number:
**PCT/CN2024/090174**

(87) International publication number:
**WO 2024/222905 (31.10.2024 Gazette 2024/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.04.2023 CN 202310474162**

(71) Applicant: **China Resources Microelectronics Holdings Limited**
**Jingan District**
**Shanghai 200072 (CN)**

(72) Inventors:
- **CHAI, Jiajing**
  **Wuxi, Jiangsu 214135 (CN)**
- **ZENG, Weimin**
  **Wuxi, Jiangsu 214135 (CN)**
- **BAO, Sigang**
  **Wuxi, Jiangsu 214135 (CN)**
- **HE, Yuming**
  **Wuxi, Jiangsu 214135 (CN)**
- **SUN, Shanhai**
  **Wuxi, Jiangsu 214135 (CN)**

(74) Representative: **Dai, Simin**
**Reyda IP**
**A073**
**157, Quai du Président Roosevelt**
**92130 Issy-les-Moulineaux (FR)**

(54) **ECC ANTI-ATTACK METHOD AND APPARATUS SUITABLE FOR AUTOMOBILE SECURITY CHIP, DEVICE, AND MEDIUM**

(57) The present invention provides an ECC anti-attack method and apparatus suitable for an automobile security chip, a device, and a medium. According to the present invention, by adjusting points accumulated in a scalar average decomposition method, an operational operation in each cycle is the same, that is, point double and point addition are performed in each cycle, so that the differences in branch operation time and power consumption between the cycles in the operation process can be eliminated, sensitive information cannot be identified by means of a power consumption attack, and the problem of being unable to meeting high fault error detection rate required by the ISO 26262 function security standard of the automobile chip due to the use of a pseudo-operation manner is also avoided.

In a process of a scalar multiplication operation by a scalar average decomposition method, in a case where all bits in a scalar bit group corresponding to a current loop have a value of 0, perform a point operation decomposition on a next loop based on a principle of keeping a final calculation result unchanged, to obtain a first part of point operation allocated to the current loop and a second part of point operation allocated to the next loop — S11

Determine, based on a value of each of bits in a scalar bit group corresponding to a last loop in the process of the scalar multiplication operation, whether to be capable of performing the point operation decomposition on the last loop; and in response to determining that the point operation decomposition is not capable of being performed on the last loop, preprocess the scalar bit group corresponding to the last loop, so as to be capable of performing the point operation decomposition on the last loop — S12

FIG. 1

# EP 4 708 052 A1

## Description

### CROSS-REFERENCE OF RELATED APPLICATIONS

This application claims priority to Chinese Patent Application No. 202310474162.8 filed on April 27, 2023, the entire contents of which are incorporated herein by reference.

### TECHNICAL FIELD

The present disclosure relates to the technical field of vehicle security chips, in particular to an elliptic curve cryptosystem (ECC) anti-attack method and apparatus applicable to a vehicle security chip, a device, and a medium.

### BACKGROUND

In the field of vehicle security chips, an elliptic curve cryptosystem (ECC) has been widely implemented and applied due to its advantage of "short key" under the same level of security strength compared with the conventional Rivest, Shamir, Adleman (RSA) public key cryptosystem. The ECC has been widely implemented and applied. Particularly, in the high concurrency security authentication scenario of vehicle to everything (V2X), the ECC has replaced the RSA as the mainstream public key cryptosystem. Compared with a smart card and an Internet of Things (IoT) security chip, although internal storage resources of the vehicle security chip are slightly richer, the vehicle security chip still belongs to the category of embedded microcontroller unit (MCU) chip, and the consumption of the internal storage resources has certain limitations, which has higher requirements for the implementation performance of the ECC.

The realization of the circuit in the vehicle chip often needs to take into account the requirements of the ISO26262 functional safety standard to meet the higher circuit fault detection rate. In addition, side channel attacks (SCA) against cryptographic circuits are increasingly becoming a major threat to information leakage. The SCA can analyze secret data such as keys in cryptographic circuits by characterizing the side information such as power consumption and electromagnetism leaked from cryptographic algorithms operating in the circuits. Power consumption/electromagnetic analysis is currently the most common type of the side channel attacks, which involves monitoring physical information such as current, voltage, and electromagnetic leakage from encryption systems to carry out attacks. Simple Power/Electromagnetic Analysis (SPA/SEMA) can carry out the attack by directly observing the power consumption characteristics of the cryptographic circuits during operation. If there are clearly identifiable features on the power consumption curve, a large amount of sensitive information can be obtained by analyzing a single curve. Fault injection attacks are another threatening means of cryptographic circuit attack, which injects faults into key steps of cryptographic circuit operation and analyzes the injection results to obtain secret data.

Therefore, the implementation of vehicle security chip ECC needs to simultaneously balance the goals of high efficiency, high fault detection rate, and attack resistance, as well as be economical in terms of resource overhead.

### SUMMARY

According to a first aspect of the present disclosure, there is provided an elliptic curve cryptosystem (ECC) anti-attack method applicable to a vehicle security chip, including: in a process of a scalar multiplication operation by a scalar average decomposition method, in a case where all bits in a scalar bit group corresponding to a current loop have a value of 0, performing a point operation decomposition on a next loop based on a principle of keeping a final calculation result unchanged, to obtain a first part of point operation allocated to the current loop and a second part of point operation allocated to the next loop.

In some embodiments of the first aspect of the present disclosure, the ECC anti-attack method further includes: determining, based on a value of each of bits in a scalar bit group corresponding to a last loop in the process of the scalar multiplication operation, whether to be capable of performing the point operation decomposition on the last loop, and in response to determining that the point operation decomposition is not capable of being performed on the last loop, preprocessing the scalar bit group corresponding to the last loop, so as to be capable of performing the point operation decomposition on the last loop.

In some embodiments of the first aspect of the present disclosure, performing the point operation decomposition on the next loop based on the principle of keeping the final calculation result unchanged includes: expressing, before performing the point operation decomposition, accumulated points in the next loop as T, and expressing, after performing the point operation decomposition, points of the first part of point operation as T', and points of the second part of point operation as T''; and performing the point operation decomposition on the accumulated points T such that T, T', and T'' conform to: $[2]T'+T''=T$.

In some embodiments of the first aspect of the present disclosure, performing the point operation decomposition on the accumulated points T includes: when all bits in a scalar bit group $[I_{m-1}, ..., I_1, I_0]$ corresponding to the next loop have a value of 0, decomposing the accumulated points T to obtain: the points of the first part of point operation allocated into the current loop: $T'=[2^{s-1}]P$, and the points of the second part of point operation allocated into the next loop: $T''=-[2^s]P$; where m represents a number of segments into which a scalar is decomposed in the scalar average decomposition method; s represents a length of each of the segments; and P represents any one point on an elliptic curve.

In some embodiments of the first aspect of the present disclosure, performing the point operation decomposition on the accumulated points T includes: when only one bit $I_i$ in a scalar bit group $[I_{m-1}, ..., I_1, I_0]$ corresponding to the next loop has a value of 1, decomposing the accumulated points T to obtain: the points of the first part of point operation allocated into the current loop: $T'=[2^{i*s}]P$, and the points of the second part of point operation allocated into the next loop: $T''=-[2^{i*s}]P$; where m represents a number of segments into which a scalar is decomposed in the scalar average decomposition method, and $0 \leq i \leq m-1$; P represents any one point on an elliptic curve; and s represents a length of each of the segments.

In some embodiments of the first aspect of the present disclosure, performing the point operation decomposition on the accumulated points T includes: when two or more bits in a scalar bit group $[I_{m-1}, ..., I_1, I_0]$ corresponding to the next loop have a value of 1, $Ii_{(0)}=...=Ii_{(x-1)}=Ii_{(x)}=1$, decomposing the accumulated points T to obtain: the points of the first part of point operation allocated into the current loop: $T'=[2^{i(x)*s-1}]P$, and the points of the second part of point operation allocated into the next loop: $T''=[2^{i(0)*s}] \cdot 0P+...+[2^{i(x-1)*s}]P$; where m represents a number of segments into which a scalar is decomposed in the scalar average decomposition method, and $0 \leq i(0)<...<i(x-1)<i(x) \leq m-1$; P represents any one point on an elliptic curve; and s represents a length of each of the segments.

In some embodiments of the first aspect of the present disclosure, preprocessing the scalar bit group corresponding to the last loop, so as to be capable of performing the point operation decomposition on the last loop, includes: in response to a lowest bit of a scalar having a value of 1, and at least one bit in the scalar bit group corresponding to the last loop having a value of 1, determining that there is no need to perform the point operation decomposition; in response to a lowest bit of a scalar having a value of 0, obtaining, by adding 1 to a scalar k, a scalar k'=k+1 to ensure that at least one bit in the last loop has a value of 1, and correcting, by subtracting a point P from the final calculation result after completing all operations, a calculation result deviation caused by a preprocessing of the scalar, where P represents any one point on an elliptic curve.

In some embodiments of the first aspect of the present disclosure, the method further includes: in response to a lowest bit of a scalar having a value of 1, obtaining, by subtracting $2^s$ from a scalar k, a scalar $k'=k-2^s$, and correcting, by adding a point $[2^s]P$ to the final calculation result after completing all operations, a calculation result deviation caused by a preprocessing of the scalar, such that the process of the scalar multiplication operation is independent of a parity of a scalar, where P represents any one point on an elliptic curve.

In some embodiments of the first aspect of the present disclosure, in a case of $[2]T'+T''=T$, the final calculation result remains unchanged.

In some embodiments of the first aspect of the present disclosure, the method further includes: decomposing, based on the scalar average decomposition method, a scalar into m segments on average, where a length of each of the segments is expressed as s, and m and s are integers.

In some embodiments of the first aspect of the present disclosure, the method further includes, before decomposing the scalar into m segments on average: pre-calculating points on an elliptic curve.

According to a second aspect of the present disclosure, there is provided an elliptic curve cryptosystem (ECC) anti-attack apparatus applicable to a vehicle security chip, including: a point operation decomposition module, configured to: in a process of a scalar multiplication operation by a scalar average decomposition method, in a case where all bits in a scalar bit group corresponding to a current loop have a value of 0, perform a point operation decomposition on a next loop based on a principle of keeping a final calculation result unchanged, to obtain a first part of point operation allocated to the current loop and a second part of point operation allocated to the next loop.

In some embodiments of the second aspect of the present disclosure, the apparatus further includes: a scalar preprocessing module, configured to: determine, based on a value of each of bits in a scalar bit group corresponding to a last loop in the process of the scalar multiplication operation, whether to be capable of performing the point operation decomposition on the last loop; and in response to determining that the point operation decomposition is not capable of being performed on the last loop, preprocess the scalar bit group corresponding to the last loop, so as to be capable of performing the point operation decomposition on the last loop.

According to a third aspect of the present disclosure, there is provided a computer readable storage medium, storing computer programs thereon, where the computer programs, when executed by a processor, cause the processor to perform the ECC anti-attack method applicable to a vehicle security chip.

According to a fourth aspect of the present disclosure, there is provided a vehicle security chip, including: a processor and a memory; where the memory is configured to store computer programs; and the computer programs, when executed by the processor, cause the processor to perform the ECC anti-attack method applicable to a vehicle security chip.

The ECC anti-attack method and apparatus applicable to the vehicle security chip, the device, and the medium provided by the present disclosure have the following beneficial effects: the points accumulated in the scalar average decomposition method are adjusted so that each loop has the same calculating operation, i.e., each loop performs both the point multiplication operation and point addition operation, which eliminates the difference on operation time and power consumption of the branch between the loops in the process of operation, makes it impossible to identify sensitive information through power consumption attacks, and also avoids the problem, caused by the fake operation, of failing to meet high fault detection rate required by the ISO26262 functional safety standard for the vehicle chip. With less calculation load and fewer pre-storage points, the present disclosure can achieve the above-mentioned beneficial effects.

**BRIEF DESCRIPTION OF THE DRAWINGS**

FIG. 1 is a flowchart illustrating an ECC anti-attack method applicable to a vehicle security chip according to an embodiment of the present disclosure.
FIG. 2 is a structural schematic diagram illustrating an ECC anti-attack apparatus applicable to a vehicle security chip according to an embodiment of the present disclosure.
FIG. 3 is a structural schematic diagram illustrating a vehicle security chip according to an embodiment of the present disclosure.

**DETAILED DESCRIPTION OF THE EMBODIMENTS**

Embodiments of the present disclosure are described below by way of particular specific examples, and other advantages and efficacies of the present disclosure can be readily appreciated by those skilled in the art from what is disclosed herein. The present disclosure may be implemented or applied in different specific embodiments, and the details in the present specification may be modified or altered based on different views and applications without departing from the spirit of the present disclosure. It is to be noted that the embodiments in the present disclosure and the features in the embodiments may be combined with each other if there is no conflict.
It is to be noted that in the following description, reference is made to the accompanying drawings, which depict several embodiments of the present disclosure. It is to be understood that other embodiments may be adopted and that mechanical composition, structural, electrical, and operational changes may be made without departing from the spirit and scope of the present disclosure. The following detailed description should not be considered limiting, and the scope of the embodiments of the present disclosure is limited only by the claims of the present disclosure. The terminology used herein is for the purpose of describing particular embodiments only and is not intended to be limiting of the present disclosure. Space-related terms such as "up", "down", "left", "right", "below," "under," "lower," "lower," "upper," "upper," etc., may be used in the text to facilitate illustration of the relationship between an element or feature and another element or feature shown in the drawings.
In the descriptions of the present disclosure, it is noted that terms "mounting," "coupling," "connection," "fixing" and "holding" shall be understood in a broad sense unless otherwise stated clearly. For example, the terms may refer to a fixed connection, and may also refer to a detachable connection or an integrated connection. The connection may be a mechanical connection or an electrical connection, and the connection may be a direct connection or an indirect connection through an intermediate medium. Persons of ordinary skill in the art may understand specific meanings of the above terms in the present disclosure according to a specific situation.
As used herein, terms determined by "a," "an" and "the" in their singular forms in the present application and the appended claims are also intended to include plurality, unless the context indicates otherwise. It is to be further understood that the terms "including", "including" indicate the presence of the feature, operation, element, component, item, category, and/or group, but do not exclude the presence, appearance, or addition of one or more other features, operations, elements, components, items, categories, and/or groups. The terms "or" and "and/or" as used herein are to be construed as inclusive or to mean either or any combination. Thus, "A, B or C" or "A, B and/or C" means "any of the following: A; B; C; A and B; A and C; B and C; A, B and C". Exceptions to the definition occur only when combinations of components, functions or operations are inherently mutually exclusive in certain ways.
In the embedded chip ECC high-efficiency implementation solution in the related art, in order to improve the efficiency of the most time-consuming "scalar multiplication" operation in the ECC operation, the "scalar average decomposition method" is usually adopted. The scalar average decomposition method is a calculation method, in the scalar average decomposition method, the scalar is decomposed into n segments (n is an integer) on average, and the loop scanning is performed on the bits of the sub-scalars of the n segments simultaneously. The scalar average decomposition method makes the efficiency of scalar multiplication much higher by pre-calculating as well as pre-storing the points to complete a part of the calculating in advance by pre-calculating. Illustrated by an example of decomposing the scalar into four segments on average, the implementation of the scalar average decomposition method is described as

follows.

| Algorithm 1: scalar average decomposition method |
|---|
| Input: scalar $k=(k_{t-1}, ..., k_1, k_0)_2$, and P is any one point on an elliptic curve $E(F_q)$ |
| Output: $[k]P$ |
| At step 1, the pre-calculating is performed by the point multiplication operation as following: $P1=[2^s]P$, $P2=[2^s]P1$, $P3=[2^s]P2$, and $[k]P=[a]P3+[b]P2+[c]P1+[d]P$. |
| At step 2, the pre-calculating is performed by the point addition operation as following: $T[j_3, j_2, j_1, j_0] = [j_3]P3 + [j_2]P2+ [j_1]P1+ [j_0]P$, where the values of bits $j_3, j_2, j_1, j_0$ are 0 or 1, respectively. |
| At step 3, the scalar k is decomposed into four segments on average, expressed as a, b, c, and d, with each segment having a length of $s = \lfloor t/4 \rfloor$, and $k = a \times 2^{3s} + b \times 2^{2s} + c \times 2^s + d$, where t represents the length of the scalar k. |
| At step 4, for i from s-1 to 0, steps 4.1 to 4.2 are repeated as following: |
| at step 4.1, the point multiplication operation is performed, $Q \leftarrow [2]Q$; |
| at step 4.2, if the value of any one of the bits $a_i$, $b_i$, $c_i$, and $d_i$ is not 0, the point addition operation is performed, $Q \leftarrow Q+T[a_i, b_i, c_i, d_i]$. |
| At step 5: return to Q. |

The scalar in the ECC scalar multiplication operation usually needs to be kept confidential, that is, sensitive information that cannot be obtained by an attacker. The problem with the scalar average decomposition method is that there is difference on branches in the point addition operation in step 4.2. For example, when the values of a plurality of bits (also known as a scalar bit group) of the scalar corresponding to the current loop are all 0 (i.e., $a_i=b_i=c_i=d_i=0$ in the algorithm 1), the point T added by the point Q (i.e., $T[a_i, b_i, c_i, d_i]$ in the algorithm 1) is an infinity point O. According to the principle of elliptic curves, any point P on the elliptic curve $E(F_q)$ conforms to P+O=P. Therefore, the operation of adding an infinity point to a point does not need to be performed, which results in a difference between the branches of the current loop and those of other loops. That is, when all bits in the scalar bit group corresponding to the current loop have a value of 0, there is no need to perform the point addition operation in step 4.2, while the point multiplication operation in step 4.1 is required for each loop. The power consumption curve shows significant differences between the point addition operation and the point multiplication operation due to their different operating steps. Therefore, once an attacker discovers that two point multiplication operations (for example, the point multiplication operation of the current loop and the point multiplication operation of the next loop) are performed continuously (that is, the current loop lacks the step of the point addition operation), the attacker can learn that all bits in the scalar bit group corresponding to the current loop have a value of 0, as a result, sensitive information is leaked, and SPA attacks cannot be resisted.

To solve the above-mentioned problem, a method is provided in the related art, for example, when all bits of the scalar bit group corresponding to the current loop have a value of 0, a fake operation is performed, that is, a point addition operation is also performed, but the result is discarded. This point addition operation can be called a fake operation. An algorithm 2 is specifically shown below.

> **Algorithm 2: scalar average decomposition method for eliminating a branch difference by a fake operation**
>
> Input: scalar $k=(k_{t-1}, ..., k_1, k_0)_2$, and P is any one point on an elliptic curve $E(F_q)$
>
> Output: [k]P
>
> At step 1, the pre-calculating is performed by the point multiplication operation as following: $P1=[2^s]P$ , $P2=[2^s]P1$ , $P3=[2^s]P2$ , and $[k]P=[a]P3+[b]P2+[c]P1+[d]P$.
>
> At step 2, the pre-calculating is performed by the point addition operation as following: $T[j_3, j_2, j_1, j_0] = [j_3]P3 + [j_2]P2+ [j_1]P1+ [j_0]P$, where the values of bits $j_3, j_2, j_1, j_0$ are 0 or 1, respectively.
>
> At step 3, the scalar k is decomposed into four segments on average, expressed as a, b, c, and d, with each segment having a length of $s = \lfloor t/4 \rfloor$, and $k = a \times 2^{3s} + b \times 2^{2s} + c \times 2^s + d$, where t represents the length of the scalar k.
>
> At step 4, for i from s-1 to 0, steps 4.1 to 4.2 are repeated as following:
>
> at step 4.1, the point multiplication operation is performed, $Q \leftarrow [2]Q$;
>
> at step 4.2, if the value of any one of the bits $a_i$, $b_i$, $c_i$, and $d_i$ is not 0, the point addition operation is performed, $Q \leftarrow Q+T[a_i, b_i, c_i, d_i]$; if the values of the bits $a_i$, $b_i$, $c_i$, and $d_i$ are all 0, the point addition operation is performed, $Q' \leftarrow Q+T[0, 0, 0, 1]$ (i.e., the fake operation is performed, and the result of the fake operation Q' is discarded).
>
> At step 5: return to Q.

The algorithm 2 eliminates the difference on operation time and power consumption of the branch between the loops during the operation process, making it impossible to distinguish from the power consumption characteristics during the operation process, and achieving the effect of resisting SPA attacks. Moreover, the increased calculation load is also relatively small. The algorithm 2 is currently the commonly used ECC anti-attack method.

The commonly used ECC anti-attack method (algorithm 2) eliminates the difference on power consumption characteristics during the operation process and can resist SPA attacks, however, the method (algorithm 2) cannot resist a fault injection attack called safe-error. During the process of observing the execution power consumption of ECC circuit, the attacker applies fault injection to the circuit when observing the execution of point addition operation (i.e., the step 4.2 of the algorithm 2). By observing the impact of fault injection on the final execution result, the authenticity of the point addition operation injected fault can be distinguished. That is, if the injected fault affects the final execution result, it can be determined that the point addition operation injected fault is a true operation, that is, a value of at least one bit in the scalar bit group corresponding to the current loop is not 0. On the contrary, if the injected fault does not affect the final result, it can be determined that the point addition operation injected fault is a fake operation, that is, all bits in the scalar bit group corresponding to the current loop have a value of 0. Once the attacker identifies the authenticity of the point addition operations in each loop of the ECC operation process through a safe-error attack, sensitive scalar information can be obtained through the SPA attack.

In addition, the commonly used ECC anti-attack method introduces a fake operation step that does not affect the final result, and the method will pose a significant obstacle to the circuit fault detection rate required by the ISO26262 functional safety standard when implemented in the vehicle security chip. The cryptographic algorithm itself has good diffusion and avalanche effects. Any small changes in data during the algorithm execution process will greatly affect the final result. This characteristic makes it only necessary to check the correctness of the final result of the cryptographic circuit execution in engineering, that is, to use a high probability of error detection to determine whether local circuit has malfunctioned. For the execution of ECC algorithm, for example, to check whether there is a circuit failure during the signature operation, it is simple to verify the signature result to determine whether there is a circuit failure. However, once a fake operation step that does not affect the final result is introduced to resist the SPA attack, even if the local circuit that executes the fake operation branch (such as a branch of the state machine) and the internal memory used to store the result of the fake operation fail (including temporary or persistent failures), it is impossible to determine whether the failure has occurred based on the correctness of the final execution result.

Therefore, the commonly used ECC anti-attack method currently cannot resist the SPA attack combined with the safe-error fault injection attack, and it is also difficult to meet the circuit fault detection rate required by the ISO26262 functional safety standard.

In view of the above drawbacks in the related art, it is an object of the present disclosure to address the problem that the commonly used ECC anti-attack method currently cannot resist the SPA attack combined with the safe-error fault injection attack, and it is also difficult to meet the circuit fault detection rate required by the ISO26262 functional safety standard.

An ECC anti-attack method applicable to a vehicle security chip, a system, a terminal, and a medium provided by the embodiments of the present disclosure are intended to propose an improved scalar average decomposition method. In the embodiments of the present disclosure, if the values of all bits in the scalar bit group corresponding to the current loop are 0, by changing the points added in the current loop and the next loop, there is no branch situation where the point addition operation is skipped, so that the operations in each loop are the same. That is, the point multiplication operation and the point addition operation are performed in each loop, so that the difference on operation time and power consumption of the branch between the loops in the process of operation can be eliminated. This makes it impossible to identify sensitive information by power consumption attack, and the point operation (whether it is a point multiplication operation or a point addition operation) of each loop is true operation, therefore, once any step of this method is injected with fault, which will affect the final operation result.

To clarify the purpose, technical solution, and advantages of the present disclosure, further detailed explanations of the technical solution in the present disclosure are provided through the following embodiments and in conjunction with the accompanying drawings. It is understood that the specific examples described herein are only used to explain the present disclosure rather than limit the present disclosure.

Before the disclosure is further explained in detail, the nouns and terms involved in the embodiments of the disclosure are explained, and the nouns and terms involved in the embodiments of the disclosure are applicable to the following explanations.

Elliptic curve cryptosystem (ECC) is a kind of public key cryptosystem based on elliptic curve discrete logarithm problem. It is a kind of cryptosystem obtained by replacing the finite cyclic group of elliptic curve cryptosystem based on discrete logarithm problem with the finite point group of elliptic curve over a finite field. For the security of elliptic curve cryptosystem, its mathematical basis is to calculate the difficulty of elliptic curve discrete logarithm problem (ECDLP). The core operation of elliptic curve cryptosystem is the scalar multiplication operation.

The scalar multiplication operation is a rule when the same point is operated for many times in ECC calculation, and can be expressed as [k]G, where k represents a scalar and g represents a point. The scalar multiplication operation is an operation performed by loop scanning for a plurality of bits of a scalar. In the ECC calculation, the scalar multiplication operation is usually decomposed into two basic operations, namely, a point multiplication operation and a point addition operation.

The point multiplication operation is to add a point to itself.

The point addition operation is to add two different points on an elliptic curve.

Herein, the point multiplication operation and the point addition operation can be collectively called a point operation, that is, the point operation includes the point multiplication operation and the point addition operation.

The embodiments of the present disclosure provide an ECC anti-attack method applicable to a vehicle security chip, a system for executing the ECC anti-attack method applicable to the vehicle security chip, and a storage medium for storing executable programs for implementing the ECC anti-attack method applicable to the vehicle security chip. As far as the implementation of the ECC anti-attack method applicable to the vehicle security chip is concerned, the embodiment of the present disclosure will explain an exemplary implementation scenario of ECC anti-attack to the vehicle security chip.

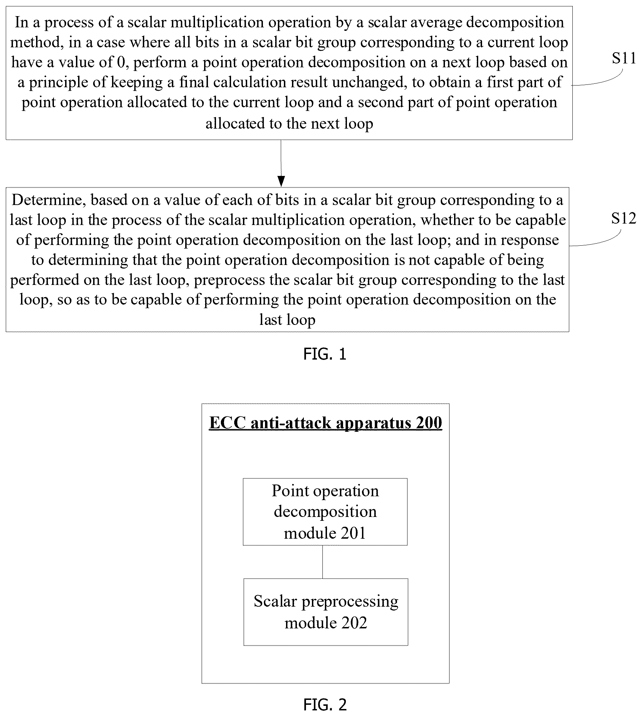

FIG. 1 is a flowchart illustrating an ECC anti-attack method applicable to a vehicle security chip according to an embodiment of the present disclosure. The ECC anti-attack method applicable to the vehicle security chip provided by the embodiments of the present disclosure includes the following steps S11 to S12.

At step S11, in a process of a scalar multiplication operation by a scalar average decomposition method, in a case where all bits in a scalar bit group corresponding to a current loop have a value of 0, a point operation decomposition is performed on a next loop based on a principle of keeping a final calculation result unchanged, to obtain a first part of point operation allocated to the current loop and a second part of point operation allocated to the next loop. The scalar multiplication operation is an operation performed by loop scanning for a plurality of bits of a scalar.

In the embodiment, performing the point operation decomposition on the next loop based on the principle of keeping the final calculation result unchanged includes: expressing, before performing the point operation decomposition, accumulated points in the next loop as T, and expressing, after performing the point operation decomposition, points of the first part of point operation as T', and points of the second part of point operation as T"; and performing the point operation decomposition on the accumulated points T such that T, T', and T" conform to:

$$[2]T'+T''=T.$$

In the case of $[2]T'+T''=T$, the final calculation result remains unchanged. Herein, the accumulated points refer to the intermediate result (temporary variable points) of iterative operation in the process of scalar multiplication operation.

In the embodiment, when the scalar multiplication [k]P is calculated by the scalar average decomposition method, the length of the scalar k is t, and the scalar k is decomposed into m segments with each segment having a length of $s = \lfloor t/m \rfloor$. In the process of scanning the scalar bit group, for example, the values of all bits of the scalar bit groups corresponding to the current loop are 0, which can be expressed as the first bit group $[j_{m-1},..., j_1, j_0]$ and conform to $[j_{m-1},..., j_1, j_0]=[0,...,0,0]$. The scalar bit group corresponding to the next loop is expressed as the second bit group $[I_{m-1},..., I_1, I_0]$, where the values of $I_{m-1},..., I_1, I_0$ are 0 or 1, and the accumulated points $T[I_{m-1},..., I_1, I_0] = [I_{m-1} \cdot 2^{(m-1)s}]P+...+[I_1 \cdot 2^s]P + [I_0]P$ in the next loop before decomposition.

By decomposing the accumulated points $T[I_{m-1}, ..., I_1, I_0]$, a part of the calculation amount is transferred to the current loop, so that both the current loop and the next loop perform the point addition operation. The accumulated points T are decomposed to obtain points T' (points of the first part of point operation) that perform the first point operation are allocated into the current loop, and obtain points T" (points of the second part of point operation) that perform the second point operation are allocated into the next loop. According to the overall operation of the loop, as long as $[2]T'+T''=T$ is satisfied, the final result can be kept unchanged. It is to be understood that each round of operation (each loop) includes the point multiplication operation and the point addition operation. Because the point multiplication operation must be performed first in each round of operation, T' will become [2]T' in the next loop.

In the embodiment of the present disclosure, the values of T' and T" can be determined according to the values of scalar bit group $[I_{m-1}, ..., I_1, I_0]$ corresponding to the next loop.

In some embodiments, when the values of all bits in the scalar bit group $[I_{m-1}, ..., I_1, I_0]$ corresponding to the next loop are 0, that is, $I_{m-1}=...=I_1= I_0=0$, $T'=[2^{s-1}]P$, $T''=-[2^s]P$; s represents the length of each segment.

In some embodiments, when only one bit in the scalar bit group $[I_{m-1}, ..., I_1, I_0]$ corresponding to the next loop has a value of 1, that is, $I_i=1$ ($0 \le i \le m-1$) , $T' = [2^{i*s}]P$, $T''=-[2^{i*s}]P$; s represents a length of a segment.

In some embodiments, when the values of two or more bits of the scalar bit group $[I_{m-1},..., I_1, I_0]$ corresponding to the next loop are 1, that is, $Ii_{(0)}=...=I_{i(x-1)}=I_{i(x)}=1(0 \le i(0)<...<i(x-1)<i(x) \le m-1)$, $T'=[2^{i(x)*s-1}]P$, $T''=[2^{i(0)*s}]P+...+[2^{i(x-1)*s}]P$; s represents a length of a segment.

At step S12, it is determined, based on a value of each of bits in a scalar bit group corresponding to a last loop in the process of the scalar multiplication operation, whether to be capable of performing the point operation decomposition on the last loop; and in response to determining that the point operation decomposition is not capable of being performed on the last loop, the scalar bit group corresponding to the last loop is preprocessed, so as to be capable of performing the point operation decomposition on the last loop.

In the embodiment of the present disclosure, if the values of all bits in the scalar bit group corresponding to the last loop are 0, it is impossible to perform the point operation decomposition, which can be solved by preprocessing the scalar.

In the embodiments of the present disclosure, considering that in the scalar average decomposition method, the scalar bit group is scanned from high bit to low bit, the following judgment can be made: if the value of the lowest bit of the scalar is 1, at least one bit in the scalar bit group corresponding to the last loop has a value of 1, and it is determined that there is no need for the point operation decomposition. According to the fact that the value of the lowest bit of an even number is 0 and the value of the lowest bit of an odd number is 1, if the value of the lowest bit of a scalar is 0, by adding 1 to the scalar k, the scalar k'=k+1 is obtained to ensure that at least one bit in the scalar bit group corresponding to the last loop has a value of 1. After all operations are completed, a point P is subtracted from the final result to obtain the correct result.

In some embodiments, according to the fact that the value of the lowest bit of the even number is 0 and the value of the lowest bit of the odd number is 1, the method further includes the following steps: if the value of the lowest bit of the scalar is 1, the scalar $k'=k-2^s$ is obtained by subtracting $2^s$ from the scalar k, and the correct result can be obtained by adding the point $[2^s]P$ to the final result after all operations are completed, such that the process of the operation is independent of a parity of a scalar. In this way, no matter whether the scalar is odd or even, the operations in all loops are the same, that is, each loop includes the point addition operation and the point multiplication operation, and after all operations are completed, the point addition operation will be finally carried out to get the correct result. In other words, when k is even, 1 is added to k, i.e., k+1, and when k is odd, $2^s$ is subtracted from k, i.e., $k-2^s$, so that whether K is odd or even, the point addition operation is always needed to restore the result.

The following section gives an example of the implementation of the improved scalar average decomposition method by averaging the scalar k into four segments (for other segmentation cases, the same can be done by referring to an algorithm 3 to give implementations with no branch differences (differences in terms of operation time and power consumption)).

---

**Algorithm 3: the improved scalar average decomposition method**

Input: scalar $k=(k_{t-1}, ..., k_1, k_0)_2$, and P is any one point on an elliptic curve $E(F_q)$

Output: [k]P

At step 1, the pre-calculating is performed by the scalar multiplication operation as following: $T1=[2^{s-1}]P, T2=[2^s]T1, T3=[2^s]T2$.

At step 2, the pre-calculating is performed by the point multiplication operation as following: $P1=[2]T1$，$P2=[2]T2$，$P3=[2]T3$.

At step 3, the pre-calculating is performed by the point addition operation as following: $T[j_3, j_2, j_1, j_0] = [j_3]P3 + [j_2]P2 + [j_1]P1 + [j_0]P$, where T represents a temporary variable point, and the values of bits $j_3, j_2, j_1, j_0$ are 0 or 1, respectively.

At step 4, if $k_0=0$, $k' = k+1$; if $k_0=1$, $k'=k-2^s$, where $s = \lfloor t/4 \rfloor$ is the length of each segment, and $k_0$ represents the lowest bit of the scalar k.

At step 5, the scalar k' is decomposed into four segments on average, expressed as a, b, c, and d, where s is the length of each segment, and $k' = a \times 2^{3s} + b \times 2^{2s} + c \times 2^s + d$.

At step 6, for i from s-1 to 0, steps 6.1 to 6.2 are repeated as following:

at step 6.1, the point multiplication operation is performed, $Q \leftarrow 2Q$;

at step 6.2, the values of bits $a_{i-1}$, $b_{i-1}$, $c_{i-1}$, $d_{i-1}$ in the previous loop, and the values of bits $a_i$, $b_i$, $c_i$, $d_i$ in the current loop are determined, where

at step 6.2.1, if $a_{i-1}=b_{i-1}=c_{i-1}=d_{i-1}=0$,

the point addition operation is performed, $Q \leftarrow Q+T''[a_i, b_i, c_i, d_i]$ (see Table 1 for the values of T'' [n,m,l,j]);

at step 6.2.2, if the value of at least one of $a_{i-1}$, $b_{i-1}$, $c_{i-1}$ and $d_{i-1}$ is 1, and $a_i=b_i=c_i=d_i=0$,

the point addition operation is performed, $Q \leftarrow Q+T'[a_{i+1}, b_{i+1}, c_{i+1}, d_{i+1}]$ (see Table 1 for the values of T'[n,m,l,j]);

at step 6.2.3, if the value of at least one of $a_{i-1}$, $b_{i-1}$, $c_{i-1}$ and $d_{i-1}$ is 1, and the value of at least one of $a_i$, $b_i$, $c_i$ and $d_i$ is 1, and the point addition operation is performed, $Q \leftarrow Q+T[a_i, b_i, c_i, d_i]$.

At step 7: if $k_0=0$, $Q \leftarrow Q-P$; if $k_0=1$, $Q \leftarrow Q+P1$

At step 8: return to Q.

---

Herein, the repeated steps are called a loop, for example, steps 4.1 to 4.2 in the algorithms 1 and 2 and steps 6.1 to 6.2 in the algorithm 3.

Table 1 below indicates the points T' and T" used by the improved scalar average decomposition method when the scalar is decomposed into four segments.

Table 1: the points T' and T" used by the improved scalar average decomposition method when the scalar is decomposed into four segments

| n,m,l,j | T' | T" |
|---|---|---|
| 0,0,0,0 | T1 | -T[0,0,1,0] = -P1 |
| 0,0,0,1 | T[0,0,0,1] = P | -T[0,0,0,1] = -P |
| 0,0,1,0 | T[0,0,1,0] = P1 | -T[0,0,1,0] = -P1 |
| 0,0,1,1 | T1 | T[0,0,0,1] = P |
| 0,1,0,0 | T[0,1,0,0] = P2 | -T[0,1,0,0] = -P2 |
| 0,1,0,1 | T2 | T[0,0,0,1] = P |
| 0,1,1,0 | T2 | T[0,0,1,0] = P1 |
| 0,1,1,1 | T2 | T[0,0,1,1] = P1+P |
| 1,0,0,0 | T[1,0,0,0] = P3 | -T[1,0,0,0] = -P3 |
| 1,0,0,1 | T3 | T[0,0,0,1] = P |
| 1,0,1,0 | T3 | T[0,0,1,0] = P1 |
| 1,0,1,1 | T3 | T[0,0,1,1] = P1+P |
| 1,1,0,0 | T3 | T[0,1,0,0] = P2 |
| 1,1,0,1 | T3 | T[0,1,0,1] = P2+P |
| 1,1,1,0 | T3 | T[0,1,1,0] = P2+P1 |
| 1,1,1,1 | T3 | T[0,1,1,1] = P2+P1+P |

By using the ECC anti-attack method applicable to a vehicle security chip provided by the embodiment of the present disclosure, not only the high efficiency characteristic of the scalar average decomposition method for ECC implementation is maintained, but also the SPA attack and safe-error fault injection attack can be resisted at the same time, and in addition, the high circuit fault detection rate can be realized by checking the correctness of the final execution result in engineering, so as to meet the requirements of ISO26262 functional safety standard for the vehicle chip.

Table 2 shows the comparison between the embodiment of the present disclosure and the conventional method. As shown in Table 2, the scalar multiplication operation has a scalar length of t, a number of segments of r, where a point multiplication operation is expressed as PD, and a point addition operation is expressed as PA.

Table 2: Comparison between the present disclosure and the conventional method

| | Operation time | Pre-storage capacity | Anti-attack effect |
|---|---|---|---|
| Algorithm 1 (conventional method) | $\dfrac{t}{r}(PD + \dfrac{2^{r-1}}{2^r} PA)$ | $(2^r-1)$ points | Unable to resist SPA attacks |
| Algorithm 2 (conventional method for eliminating branch difference by the fake operation) | $\dfrac{t}{r}(PD + PA)$ | $(2^r-1)$ points | Unable to resist SPA attacks combined with safe-error fault injection attacks |
| Algorithm 3 (method provided by the present disclosure) | $\dfrac{t}{r}PD + (\dfrac{t}{r} + 1）PA$ | $(2^r+r-2)$ points and y-component of r points | resist both SPA attacks and safe-error fault injection attacks |

Through the comparison in Table 2, the method provided by the present disclosure can solve the problem that the conventional algorithm is vulnerable to SPA attacks. According to the commonly used 256-bit elliptic curve in the prime field, the key (scalar) is decomposed into four segments, and the increased operation time and storage capacity are shown in Table 3. It can be seen that under the condition of greatly improved security, the increased operation time is very small, and the increased pre-storage capacity can also be applied to the internal memory resource overhead of the vehicle chip.

Table 3: comparison of the improved algorithm and conventional algorithm in the 256-bit elliptic curve in the prime field

|  | Increased operation time | Increased pre-storage capacity |
| --- | --- | --- |
| Compared with the algorithm 1 | 5.43% | 28.89% |
| Compared with the algorithm 2 | 1.03% | 28.89% |

FIG. 2 is a structural schematic diagram illustrating an ECC anti-attack apparatus applicable to a vehicle security chip according to an embodiment of the present disclosure. In the embodiment of the present disclosure, the ECC anti-attack apparatus 200 includes a point operation decomposition module 201 and a scalar preprocessing module 202.

The point operation decomposition module 201 is configured to: in a process of a scalar multiplication operation by a scalar average decomposition method, in a case where all bits in a scalar bit group corresponding to a current loop have a value of 0, perform a point operation decomposition on a next loop based on a principle of keeping a final calculation result unchanged, to obtain a first part of point operation allocated to the current loop and a second part of point operation allocated to the next loop.

In some embodiments, when performing the point operation decomposition on the next loop based on the principle of keeping the final calculation result unchanged, the point operation decomposition module 201 is configured to: express, before performing the point operation decomposition, accumulated points in the next loop as T, and express, after performing the point operation decomposition, points of the first part of point operation as T', and points of the second part of point operation as T"; and perform the point operation decomposition on the accumulated points T such that T, T', and T" conform to: $[2]T'+T"=T$.

In some embodiment, performing the point operation decomposition on the accumulated points T includes: when all bits in a scalar bit group $[I_{m-1},..., I_1, I_0]$ corresponding to the next loop have a value of 0, decomposing the accumulated points T to obtain: the points of the first part of point operation into the current loop: $T'=[2^{s-1}]P$, and the points of the second part of point operation into the next loop: $T"=-[2^s]P$; where m represents a number of segments into which a scalar is decomposed in the scalar average decomposition method; s represents a length of each of the segments; and P represents any one point on an elliptic curve.

In some embodiment, performing the point operation decomposition on the accumulated points T includes: when only one bit li in a scalar bit group $[I_{m-1},..., I_1, I_0]$ corresponding to the next loop has a value of 1, decomposing the accumulated points T to obtain: the points of the first part of point operation into the current loop: $T'=[2^{i*s}]P$, and the points of the second part of point operation into the next loop: $T"=-[2^{i*s}]P$; where m represents a number of segments into which a scalar is decomposed in the scalar average decomposition method, and $0\leq i\leq m-1$; P represents any one point on an elliptic curve; and s represents a length of each of the segments.

In some embodiment, performing the point operation decomposition on the accumulated points T includes: when two or more bits in a scalar bit group $[I_{m-1},..., I_1, I_0]$ corresponding to the next loop have a value of 1, $I_{i(0)}=...=I_{i(x-1)}=I_{i(x)}=1$, decomposing the accumulated points T to obtain: the points of the first part of point operation into the current loop: $T'=[2^{i(x)*s-1}]P$, and the points of the second part of point operation into the next loop: $T"=[2^{i(0)*s}\cdot P+...+[2^{i(x-1)*s}]P$; where m represents a number of segments into which a scalar is decomposed in the scalar average decomposition method, and $0\leq i(0)<...<i(x-1)<i(x)\leq m-1$; P represents any one point on an elliptic curve; and s represents a length of each of the segments.

The scalar preprocessing module 202 is configured to: determine, based on a value of each of bits in a scalar bit group corresponding to a last loop in the process of the scalar multiplication operation, whether to be capable of performing the point operation decomposition on the last loop; and in response to determining that the point operation decomposition is not capable of being performed on the last loop, preprocess the scalar bit group corresponding to the last loop, so as to be capable of performing the point operation decomposition on the last loop.

In some embodiments, when preprocessing the scalar bit group corresponding to the last loop, so as to be capable of performing the point operation decomposition on the last loop, the scalar preprocessing module 202 is configured to: in response to a lowest bit of a scalar having a value of 1, and at least one bit in the scalar bit group corresponding to the last loop having a value of 1, determine that there is no need to perform the point operation decomposition; in response to a lowest bit of a scalar having a value of 0, obtain, by adding 1 to a scalar k, a scalar k'=k+1 to ensure that at least one bit in the last loop has a value of 1, and correct, by subtracting a point P from the final calculation result after completing all operations, a calculation result deviation caused by a preprocessing of the scalar, where P represents any one point on an elliptic curve.

In some embodiments, the scalar preprocessing module 202 is configured to: in response to a lowest bit of a scalar having a value of 1, obtain, by subtracting $2^s$ from a scalar k, a scalar $k'=k-2^s$, and correct, by adding a point $[2^s]P$ to the final calculation result after completing all operations, a calculation result deviation caused by a preprocessing of the scalar, such that the process of the scalar multiplication operation is independent of a parity of a scalar, where P represents any one point on an elliptic curve.

It is to be noted that: the ECC anti-attack apparatus applicable to the vehicle security chip provided in the embodiments only provides examples of the division of the program modules when performing the ECC anti-attack method applicable to the vehicle security chip. In practical applications, the processing can be assigned to different program modules as needed, that is, the internal structure of the apparatus can be decomposed into different program modules to complete all or part of the processing. In addition, the ECC anti-attack apparatus applicable to the applicable to a vehicle security chip provided in the embodiments belongs to the same conception as the embodiments of the ECC anti-attack method applicable to the vehicle security chip, and the specific realization process thereof is detailed in the method embodiments, which will not be repeated here.

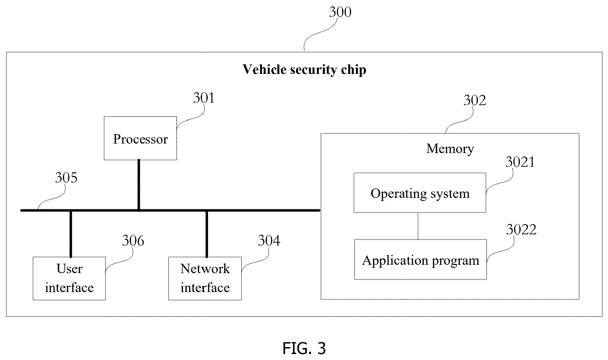

FIG. 3 is a structural schematic diagram illustrating a vehicle security chip according to an embodiment of the present disclosure. Referring to FIG. 3, the hardware structure of the vehicle security chip 300 in the embodiment of the present disclosure includes: at least one processor 301, a memory 302, at least one network interface 304, and a user interface 306. It is understood that the various components in the device may be coupled together by a bus system 305. It will be appreciated that the bus system 305 is used to implement connection communication between these components. The bus system 305 includes a power bus, a control bus, and a status signal bus in addition to the data bus. However, for clarity of illustration, various buses are denoted as bus system in FIG. 3.

The user interface 306 may include a display, a keyboard, a mouse, a trackball, a click gun, keys, buttons, a tactile pad, or a touch screen.

It can be understood that the memory 302 may be a volatile memory or a non-volatile memory, and may also include both volatile memory and non-volatile memory. The non-volatile memory may be a read only memory (ROM), a programmable read-only memory (PROM), which is used as an external cache. By way of example but not limitation, many forms of random access memory (RAM) are available, such as static random access memory (SRAM) and synchronous static random access memory (SSRAM). The memory described in the examples of the present disclosure is intended to include, but not limited to, these and any other suitable type of memory.

The memory 302 in the embodiments of the present disclosure is used to store various categories of data to support the operation of the ECC anti-attack terminal 300 applicable to the vehicle security chip. Examples of such data include any executable programs, such as an operating system 3021 and an application program 3022, for operation on the ECC anti-attack terminal 300 applicable to the vehicle security chip; the operating system 3021 contains various system programs, such as a framework layer, a core library layer, a driver layer, and the like, for implementing various underlying operations as well as for handling hardware-based tasks. The application program 3022 can include various application programs such as media player, browser, etc., used to implement various application services. The ECC anti-attack method applicable to the vehicle security chip provided by the embodiments of the present disclosure can be included in the application program 3022.

The method disclosed in the examples of the present disclosure may be applied to the processor 301 or implemented by the processor 301. The processor 301 may be an integrated circuit chip having a processing capability of a signal. In the implementation process, each step of the above method may be completed by an integrated logic circuit of hardware in the processor 301 or an instruction in the form of software. The processor 301 may include a general-purpose processor, a digital signal processor (DSP), or other programmable logic device, a discrete gate or transistor logic device, a discrete hardware component, or the like. The processor 301 may implement or execute various methods, steps, and logical block diagrams disclosed in examples of the present disclosure. The general-purpose processor 301 may be a microprocessor or any conventional processor or the like. In conjunction with the steps of the method disclosed in the examples of the present disclosure, it may be directly embodied that the execution is completed by the hardware decoding processor or a combination of the hardware in the decoding processor and software modules. The software module may be located in a storage medium, the storage medium is located in a memory, and the processor reads information in the memory, and completes the steps of the foregoing methods in conjunction with hardware thereof.

In an embodiment, the ECC anti-attack terminal 300 applicable to the vehicle security chip may be implemented by one or more of application specific integrated circuit (ASIC), DSP, programmable logic devices (PLD), or complex programmable logic device (CPLD) for performing the foregoing methods.

Those skilled in the art can understand that all or part of the steps for implementing the method embodiments can be completed through hardware related to computer programs. The computer programs can be stored in a computer readable storage medium. When the programs are executed, the steps of the method embodiment are executed. The storage medium includes: ROM, RAM, magnetic disk, or optical disk and other media that can store program codes.

In the embodiments provided in the present disclosure, the computer readable storage medium may include read-only memory, random access memory, electrically erasable programmable read only memory (EEPROM), compact disc read-only memory (CD-ROM) or other optical storage devices, magnetic disk storage devices or other magnetic storage devices, flash memory, universal serial bus (USB) flash drives, portable hard drives, or any other medium that can be used to store desired program code in the form of instructions or data structures and can be accessed by a computer. Additionally, any connection can be appropriately referred to as a computer-readable medium. For example, if the instruction is sent from a website, server, or other remote source using coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of the medium. It is to be understood that the computer readable storage medium and the data storage medium do not include connections, carriers, signals, or other transitory medium, but are intended for non-transitory and tangible storage medium. The magnetic and optical disks used in the present disclosure include compact discs (CDs), laser discs, optical disks, digital versatile discs (DVDs), floppy disks, and Blu ray discs. The magnetic disks typically reproduce data magnetically, while optical disks reproduce data optically using lasers.

The ECC anti-attack method and apparatus applicable to the vehicle security chip, the device, and the medium provided by the present disclosure have the following beneficial effects: the points accumulated in the scalar average decomposition method are adjusted so that each loop has the same calculating operation, i.e., each loop performs both the point multiplication operation and point addition operation, which eliminates the difference on operation time and power consumption of the branch between the loops in the process of operation, makes it impossible to identify sensitive information through power consumption attacks, and also avoids the problem, caused by the fake operation, of failing to meet high fault detection rate required by the ISO26262 functional safety standard for the vehicle chip. With less calculation load and fewer pre-storage points, the present disclosure can achieve the beneficial effects. Therefore, the present disclosure effectively overcomes various shortcomings in the related art and has high industrial utilization value.

The embodiments only illustrate the principles and effects of the present disclosure, and are not used to limit the present disclosure. Anyone familiar with this technology can modify or change the embodiments without violating the spirit and scope of the present disclosure. Therefore, all equivalent modifications or changes made by those with ordinary knowledge in the related art without departing from the spirit and the technical conception in the present disclosure should still be covered by the claims of the present disclosure.

**Claims**

1.  An elliptic curve cryptosystem (ECC) anti-attack method applicable to a vehicle security chip, comprising:
    in a process of a scalar multiplication operation by a scalar average decomposition method, in a case where all bits in a scalar bit group corresponding to a current loop have a value of 0, performing a point operation decomposition on a next loop based on a principle of keeping a final calculation result unchanged, to obtain a first part of point operation allocated to the current loop and a second part of point operation allocated to the next loop.

2.  The ECC anti-attack method applicable to the vehicle security chip of claim 1, further comprising:

    determining, based on a value of each of bits in a scalar bit group corresponding to a last loop in the process of the scalar multiplication operation, whether to be capable of performing the point operation decomposition on the last loop, and
    in response to determining that the point operation decomposition is not capable of being performed on the last loop, preprocessing the scalar bit group corresponding to the last loop, so as to be capable of performing the point operation decomposition on the last loop.

3.  The ECC anti-attack method applicable to the vehicle security chip of claim 1, wherein performing the point operation decomposition on the next loop based on the principle of keeping the final calculation result unchanged comprises:

    expressing, before performing the point operation decomposition, accumulated points in the next loop as T, and expressing, after performing the point operation decomposition, points of the first part of point operation as T', and points of the second part of point operation as T"; and
    performing the point operation decomposition on the accumulated points T such that T, T', and T" conform to:

$$[2]T'+T''=T.$$

4.  The ECC anti-attack method applicable to the vehicle security chip of claim 3, wherein performing the point operation decomposition on the accumulated points T comprises:

    when all bits in a scalar bit group $[I_{m-1}, ..., I_1, I_0]$ corresponding to the next loop have a value of 0, decomposing the accumulated points T to obtain:

the points of the first part of point operation allocated into the current loop: $T'=[2^{s-1}]P$, and
the points of the second part of point operation allocated into the next loop: $T''=-[2^s]P$;

wherein m represents a number of segments into which a scalar is decomposed in the scalar average decomposition method;
s represents a length of each of the segments; and
P represents any one point on an elliptic curve.

5. The ECC anti-attack method applicable to the vehicle security chip of claim 3, wherein performing the point operation decomposition on the accumulated points T comprises:

when only one bit $l_i$ in a scalar bit group $[l_{m-1}, ..., l_1, l_0]$ corresponding to the next loop has a value of 1, decomposing the accumulated points T to obtain:

the points of the first part of point operation allocated into the current loop: $T'=[2^{i*s}]P$, and
the points of the second part of point operation allocated into the next loop: $T''=-[2^{i*s}]P$;

wherein m represents a number of segments into which a scalar is decomposed in the scalar average decomposition method, and $0 \le i \le m-1$;
P represents any one point on an elliptic curve; and
s represents a length of each of the segments.

6. The ECC anti-attack method applicable to the vehicle security chip of claim 3, wherein performing the point operation decomposition on the accumulated points T comprises:

when two or more bits in a scalar bit group $[l_{m-1}, ..., l_1, l_0]$ corresponding to the next loop have a value of 1, $l_{i(0)} = ... = l_{i(x-1)} = l_{i(x)} = 1$, decomposing the accumulated points T to obtain:

the points of the first part of point operation allocated into the current loop: $T'=[2^{i(x)*s-1}]P$, and
the points of the second part of point operation allocated into the next loop: $T''=[2^{i(0)*s}] \cdot P + ... + [2^{i(x-1)*s}]P$;

wherein m represents a number of segments into which a scalar is decomposed in the scalar average decomposition method, and $0 \le i(0) < ... < i(x-1) < i(x) \le m-1$;
P represents any one point on an elliptic curve; and
s represents a length of each of the segments.

7. The ECC anti-attack method applicable to the vehicle security chip of claim 2, wherein preprocessing the scalar bit group corresponding to the last loop, so as to be capable of performing the point operation decomposition on the last loop, comprises:

in response to a lowest bit of a scalar having a value of 1, and at least one bit in the scalar bit group corresponding to the last loop having a value of 1, determining that there is no need to perform the point operation decomposition;
in response to a lowest bit of a scalar having a value of 0, obtaining, by adding 1 to a scalar k, a scalar $k'=k+1$ to ensure that at least one bit in the last loop has a value of 1, and correcting, by subtracting a point P from the final calculation result after completing all operations, a calculation result deviation caused by a preprocessing of the scalar, wherein P represents any one point on an elliptic curve.

8. The ECC anti-attack method applicable to the vehicle security chip of claim 1 or 6, further comprising: in response to a lowest bit of a scalar having a value of 1, obtaining, by subtracting $2^s$ from a scalar k, a scalar $k'=k-2^s$, and correcting, by adding a point $[2^s]P$ to the final calculation result after completing all operations, a calculation result deviation caused by a preprocessing of the scalar, such that the process of the scalar multiplication operation is independent of a parity of a scalar, wherein P represents any one point on an elliptic curve.

9. The ECC anti-attack method applicable to the vehicle security chip of claim 2, wherein in a case of $[2]T'+T''=T$, the final calculation result remains unchanged.

10. The ECC anti-attack method applicable to the vehicle security chip of claim 1, further comprising: decomposing, based on the scalar average decomposition method, a scalar into m segments on average, wherein a length of each of the segments is expressed as s, and m and s are integers.

11. The ECC anti-attack method applicable to the vehicle security chip of claim 10, further comprising, before decomposing the scalar into m segments on average: pre-calculating points on an elliptic curve.

12. an elliptic curve cryptosystem (ECC) anti-attack apparatus applicable to a vehicle security chip, comprising:
a point operation decomposition module, configured to: in a process of a scalar multiplication operation by a scalar average decomposition method, in a case where all bits in a scalar bit group corresponding to a current loop have a value of 0, perform a point operation decomposition on a next loop based on a principle of keeping a final calculation result unchanged, to obtain a first part of point operation allocated to the current loop and a second part of point operation allocated to the next loop.

13. The ECC anti-attack apparatus applicable to the vehicle security chip of claim 12, further comprising:
a scalar preprocessing module, configured to: determine, based on a value of each of bits in a scalar bit group corresponding to a last loop in the process of the scalar multiplication operation, whether to be capable of performing the point operation decomposition on the last loop; and in response to determining that the point operation decomposition is not capable of being performed on the last loop, preprocess the scalar bit group corresponding to the last loop, so as to be capable of performing the point operation decomposition on the last loop.

14. A computer readable storage medium, storing computer programs thereon, wherein the computer programs, when executed by a processor, cause the processor to perform the ECC anti-attack method applicable to a vehicle security chip according to any one of claims 1 to 11.

15. A vehicle security chip, comprising: a processor and a memory; wherein

the memory is configured to store computer programs; and
the computer programs, when executed by the processor, cause the processor to perform the ECC anti-attack method applicable to a vehicle security chip according to any one of claims 1 to 11.

In a process of a scalar multiplication operation by a scalar average decomposition method, in a case where all bits in a scalar bit group corresponding to a current loop have a value of 0, perform a point operation decomposition on a next loop based on a principle of keeping a final calculation result unchanged, to obtain a first part of point operation allocated to the current loop and a second part of point operation allocated to the next loop

S11

Determine, based on a value of each of bits in a scalar bit group corresponding to a last loop in the process of the scalar multiplication operation, whether to be capable of performing the point operation decomposition on the last loop; and in response to determining that the point operation decomposition is not capable of being performed on the last loop, preprocess the scalar bit group corresponding to the last loop, so as to be capable of performing the point operation decomposition on the last loop

S12

FIG. 1

**ECC anti-attack apparatus 200**

Point operation decomposition module 201

Scalar preprocessing module 202

FIG. 2

300

## Vehicle security chip

301                                           302

| Processor |

305

Memory

3021

| Operating system |

306          304                    3022

| User interface | | Network interface | | Application program |

FIG. 3

## INTERNATIONAL SEARCH REPORT

| International application No. |
| --- |
| **PCT/CN2024/090174** |

**A. CLASSIFICATION OF SUBJECT MATTER**

G0G06F 11/10(2006.01)i

According to International Patent Classification (IPC) or to both national classification and IPC

**B. FIELDS SEARCHED**

Minimum documentation searched (classification system followed by classification symbols)

IPC:G06F

Documentation searched other than minimum documentation to the extent that such documents are included in the fields searched

Electronic data base consulted during the international search (name of data base and, where practicable, search terms used)

CNABS: CNTXT; DWPI; VEN; WPABS; ENTXT; CNKI; IEEE; ISI; 百度, BAIDU; 必应, BING; 汽车, 芯片, 椭圆曲线, 标量, 平均, 分解, 标量乘, 比特, 结果, 点, 循环, car, chip, ECC, scalar, average, decomposition, scalar multiplication, bit, result, point, circle

**C. DOCUMENTS CONSIDERED TO BE RELEVANT**

| Category* | Citation of document, with indication, where appropriate, of the relevant passages | Relevant to claim No. |
| --- | --- | --- |
| A | 杨苏 等 (YANG, Su et al.). "一种高效的安全 SoC 芯片抗功耗攻击方案 (A Security and Efficiency Scheme of Resisting Power Attacks for SoC)" 实验室研究与探索 (Research and Exploration in Laboratory), Vol. 36, No. 10, 31 October 2017 (2017-10-31), pages 149-152 | 1-15 |
| A | 佰夜 (Baiye). "椭圆曲率算法不同曲线的安全性 (Non-official translation: Safety of Different Curves in Elliptic-curve Cryptography algorithm)" https://www.cnblogs.com/byronsh/p/ecc-algorithm-security-and-selection.html, 29 August 2021 (2021-08-29), pages 1-4 | 1-15 |
| A | CN 101562522 A (SHENZHEN INSTITUTE OF ADVANCED TECHNOLOGY) 21 October 2009 (2009-10-21) entire document | 1-15 |
| A | US 2016149704 A1 (UMM AL-QURA UNIVERSITY) 26 May 2016 (2016-05-26) entire document | 1-15 |

☑ Further documents are listed in the continuation of Box C.  ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **15 July 2024** | **24 July 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**EP 4 708 052 A1**

**INTERNATIONAL SEARCH REPORT**

| International application No. |
| --- |
| **PCT/CN2024/090174** |

**C.      DOCUMENTS CONSIDERED TO BE RELEVANT**

| Category* | Citation of document, with indication, where appropriate, of the relevant passages | Relevant to claim No. |
| --- | --- | --- |
| A | 蒲佳铭 (PU, Jiaming). "基于椭圆曲线密码算法的软硬件设计 (Non-official translation: Software and Hardware Design Based on Elliptic-curve Cryptography algorithm)" 中国优秀硕士学位论文全文数据库 信息科技辑 (Information & Technology, China Master's Theses Full-Text Database), 15 March 2022 (2022-03-15), text, pages 6-74 | 1-15 |

**INTERNATIONAL SEARCH REPORT**
Information on patent family members

International application No.

**PCT/CN2024/090174**

| Patent document cited in search report | | | Publication date (day/month/year) | Patent family member(s) | Publication date (day/month/year) |
|---|---|---|---|---|---|
| CN | 101562522 | A | 21 October 2009 | None | |
| US | 2016149704 | A1 | 26 May 2016 | None | |

Form PCT/ISA/210 (patent family annex) (July 2022)

**EP 4 708 052 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310474162